# EUROPÄISCHE PATENTSCHRIFT

(11) **EP 3 446 830 B1**
(45) Veröffentlichungstag und Bekanntmachung des Hinweises auf die Patenterteilung: **30.11.2022**
(21) Anmeldenummer: 17188015.6
(22) Anmeldetag: 25.08.2017
(51) Int. Cl.: B23Q 17/22, G01B 21/04, G05B 19/401

(54) **VORRICHTUNG UND VERFAHREN ZUM VERMESSEN EINER WERKZEUGMASCHINE**
DEVICE AND METHOD FOR MEASURING A MACHINE TOOL
DISPOSITIF ET PROCÉDÉ DE RELEVÉ D'UNE MACHINE-OUTIL

(43) Veröffentlichungstag der Anmeldung: 27.02.2019
(73) Patentinhaber: GILDEMEISTER Drehmaschinen GmbH, 33689 Bielefeld (DE)
(72) Erfinder: Bassett, Edmond, 30169 Hannover (DE); Litwinski, Kai, 30161 Hannover (DE); Halm, Christian, 33739 Bielefeld (DE)
(74) Vertreter: MERH-IP Matias Erny Reichl Hoffmann Patentanwälte PartG mbB

(56) Entgegenhaltungen:
- EP-A1- 1 696 289
- EP-A1- 2 287 688
- EP-A2- 2 584 419
- DE-A1-102015 226 387

## Beschreibung

Die vorliegende Erfindung betrifft eine Vorrichtung zum Vermessen einer Werkzeugmaschine mit einer Kalibriereinrichtung, eine entsprechende Kalibriereinrichtung und ein zugehöriges Verfahren.

Aus dem Stand der Technik sind zahlreiche Verfahren bekannt mittels derer Maschinenkomponenten der Werkzeugmaschine in Bezug auf ihre Lageposition vermessen werden können. In der Regel wird hierzu auf dem zu vermessenden Maschinenteil, insbesondere dem Werkstücktisch, eine Kalibriereinrichtung montiert und anschließend werden mittels eines häufig in der Arbeitsspindel gespannten Messtasters verschiedene Lagepositionen eines Kalibriernormals der Kalibriereinrichtung erfasst und aus den ermittelten Positionen die Lage des entsprechenden Maschinenteils ermittelt.

Derartige Messverfahren sind sowohl für Dreh- als auch für Fräsmaschinen beschrieben worden, die je nach Werkzeugmaschinentyp dann an die entsprechenden strukturellen Gegebenheiten angepasst sind.

Beispielsweise wird in der DE 10 2005 008 055 A1 ein Verfahren zum Vermessen einer programmgesteuerten Werkzeugmaschine unter Verwendung einer Messkugel beschrieben. Das Verfahren sieht vor, die hinsichtlich ihrer Abmessung vorbekannte Messkugel an einem ausgewählten Maschinenteil durch eine einfache Halterung manuell zu befestigen und nach dem Fixieren der Messkugel an dem Maschinenteil Lagepositionen mithilfe eines Messtasters zu ermitteln, der in der Arbeitsspindel eingespannt ist. Beispielsweise kann eine Halterung der Messkugel über einen Magneten an einem ausgewählten Maschinenteil befestigt werden. Der Messtaster fährt dabei programmgesteuert verschiedene Messpunkte über die Arbeitsspindel an, die auf verschiedenen Punkten der Kugeloberfläche liegen. Die Verwendung der Kugel erlaubt aufgrund der festliegenden geometrischen Beziehungen einer Kugel durch die einfache Vermessung der Kugeloberfläche die Ermittlung von Raumdaten, was erhebliche Vorteile gegenüber den in der Regel nur zweidimensional arbeitenden Messverfahren bietet. Auf diese Weise können Lageabweichungen eines Punktes nicht nur in horizontaler Ebene, sondern zusätzlich auch in der Vertikalen auf Basis der vorliegenden geometrischen Beziehung zwischen dem Mittelpunkt und der Außenfläche einer Kugel erfasst werden.

Aus der EP 2 287 688 A1 ist ein Kalibrierverfahren zur Vermessung von Drehmaschinen bekannt. Hierzu wird eine Kalibriereinrichtung mit einem zu vermessenden Kalibriernormal an einem drehbaren Teil der Drehmaschine befestigt und es werden verschiedene Drehpositionen ermittelt. Auf diese Weise kann die bei einer Drehmaschine für die Genauigkeit des zu fertigenden Werkstücks entscheidende Abweichung der Drehachse von einer Soll-Lage zuverlässig bestimmt werden.

Aus der DE 10 2015 226 387 A1 ist ein Verfahren zur Durchführung von Messungen mit einem Prüfelement bekannt, wobei das Verfahren die Schritte Anordnen eines Prüfelements in einem Messbereich einer Koordinatenmessvorrichtung in einer ersten Pose, Durchführen einer Messung unter Einbeziehung des Prüfelements, Anordnen des Prüfelements mit einer Bewegungseinrichtung in einer zweiten Pose und Durchführen einer Messung unter Einbeziehung des Prüfelements in der zweiten Pose umfasst.

Den aus dem Stand der Technik bekannten Verfahren ist es gemein, dass zur Vermessung der Werkzeugmaschine aufwendige Vorbereitungsarbeiten notwendig sind, die selbst dann erfolgen müssen, wenn der eigentliche Messvorgang nachfolgend in automatisierter Weise durchgeführt wird. Dies ist im Falle einer einmaligen Kalibrierung der Werkzeugmaschine zu Beginn des Bearbeitungsprozesses noch tolerierbar. Einer wiederholten Einmessung zur Erhöhung der Fertigungsgenauigkeit ist jedoch schon aus zeitlichen Gründen Grenzen gesetzt.

Aufgabe der Erfindung ist es, eine Vorrichtung zum Vermessen einer Werkzeugmaschine und ein zugehöriges Verfahren zum Vermessen einer Werkzeugmaschine unter Verwendung einer Kalibriereinrichtung anzugeben, die den Aufwand des Messvorgangs beim Vermessen einer Werkzeugmaschine mit einer Kalibriereinrichtung reduzieren.

Diese Aufgaben werden durch eine Vorrichtung zum Vermessen einer Werkzeugmaschine mit einer Kalibriereinrichtung mit den Merkmalen des Patentanspruchs 1 und ein Verfahren zum Vermessen einer Werkzeugmaschine mit einer Kalibriereinrichtung mit den Merkmalen des Patentanspruchs 13 gelöst. Die zugehörigen Unteransprüche geben jeweils bevorzugte Ausgestaltungen der Erfindung an.

Die erfindungsgemäße Vorrichtung zum Vermessen einer Werkzeugmaschine umfasst eine Kalibriereinrichtung, die dazu eingerichtet ist, an einem Abschnitt der Werkzeugmaschine befestigt zu werden, und einen verfahrbaren Messtaster zur Erfassung einer Position der Kalibriereinrichtung an der Werkzeugmaschine. Erfindungsgemäß weist die Kalibriereinrichtung eine Schnittstelle auf mittels derer sie in eine numerisch verfahrbare Aufnahmeeinrichtung der Werkzeugmaschine ein- und auswechselbar ist, mit der die Kalibriereinrichtung zwischen einer Bereitstellungsposition und einer Befestigungsposition an dem Abschnitt der Werkzeugmaschine transportierbar ist.

Die Bereitstellungsposition kann in einem Speicher, etwa in einem Magazin oder einem Revolver für Werkzeuge oder Werkstücke, sein, in dem die Kalibriereinrichtung aufgenommen ist, oder in einer Zwischenposition.

Die erfindungsgemäße Vorrichtung umfasst demnach eine Kalibriereinrichtung, die neben einer (ersten) Schnittstelle zur Befestigung an einem Abschnitt der Werkzeugmaschine eine weitere (zweite) Schnittstelle aufweist, mittels derer sie in einer numerisch verfahrbaren Aufnahmeeinrichtung der Werkzeugmaschine aufgenommen werden kann, mittels derer sie in eine Befestigungsposition an einen zu vermessenden Maschinenabschnitt zugestellt werden kann.

Auf diese Weise kann die Kalibriereinrichtung der erfindungsgemäßen Vorrichtung durch die numerisch verfahrbare Aufnahmeeinrichtung aufgenommen und verfahren werden, was erstmals einen vollständig automatisierten Ablauf des Vermessens einer Werkzeugmaschine ermöglicht. Auf diese Weise werden Unterbrechungen des Produktionsvorgangs an der Werkzeugmaschine, die infolge von Vorbereitungsmaßnahmen für das Vermessen der Werkzeugmaschine zu unzumutbaren Verzögerungen der Produktion führen, reduziert bzw. vollständig vermieden. Ein sonst erforderliches manuelles Vorbereiten durch Öffnen der Arbeitsraumtüren, was zu einer negativen thermischen Beeinflussung der Werkzeugmaschine führen kann, kann ebenfalls vermieden werden.

Die Aufnahmeeinrichtung richtet sich vorwiegend nach dem Typ und der Bauart der Werkzeugmaschine. Sie kann als Komponente der Werkzeugmaschine grundsätzlich vorbekannt sein. Im Falle einer Drehmaschine kann dies ein Werkzeugträger mit zugehörigem Werkzeugschlitten sein. Im Falle einer Fräsmaschine oder eines Fräszentrums zur Komplettbearbeitung kann die Aufnahmeeinrichtung auch als Spindel vorgesehen sein, die bei der Bearbeitung des Werkstücks das entsprechende Werkzeug aufnimmt.

Bei einem besonders bevorzugten Ausführungsbeispiel der erfindungsgemäßen Kalibriereinrichtung ist diese mehrteilig aufgebaut, bestehend aus einem ersten Teil, der die Schnittstelle zur Aufnahme an der Aufnahmeeinrichtung umfasst und einem davon lösbaren zweiten Teil, der das Kalibriernormal und die Schnittstelle zur Befestigung an einem Maschinenteil umfasst. Dieser zweite Teil kann ebenfalls aus mehreren, miteinander lösbar verbundenen Komponenten bestehen, muss dies aber nicht zwangsläufig. Wesentlich bei dieser Ausgestaltung ist es, dass beispielsweise das Kalibriernormal und die Schnittstelle zur Befestigung an einem Maschinenteil an dem zu vermessenden Maschinenabschnitt befestigt werden können, ohne dass die Verbindung der Schnittstelle zur Befestigung der erfindungsgemäßen Kalibriereinrichtung an der Aufnahmeeinrichtung gelöst werden muss. So ist es beispielsweise möglich, das Kalibriernormal an dem entsprechenden Maschinenabschnitt zu fixieren und die Schnittstelle zur Befestigung der erfindungsgemäßen Kalibriereinrichtung an der Aufnahmeeinrichtung in einfacher Weise abzuziehen, ohne dass die Verbindung des Kalibriernormals mit dem entsprechenden Maschinenteil gelöst wird.

Die Schnittstelle, mittels derer die erfindungsgemäße Kalibriereinrichtung in eine numerisch verfahrbare Aufnahmeeinrichtung der Werkzeugmaschine eingesetzt werden kann, weist einen Halter auf, in den ein Kalibriernormal der Kalibriereinrichtung einsetzbar ist. Dieser Halter weist ein das Kalibriernormal umgebendes Schutzgehäuse auf. Dieses Schutzgehäuse kann zweckmäßigerweise aus einer dünnwandigen flexiblen Hülse bestehen. Auf diese Weise wird das Kalibriernormal vor Verschmutzung zuverlässig geschützt. Bei einem bevorzugten Ausführungsbeispiel ist die Hülse aus einem kohlefaserverstärkten Verbundwerkstoff (CFK) gefertigt.

Die Schnittstelle zur Aufnahme der Kalibriereinrichtung in der Aufnahmeeinrichtung kann als Kegelschaft, Hohlschaftkegel (HSK), etc. ausgebildet sein und ist in ihrer bevorzugten Ausgestaltung eine beliebige vorbekannte Schnittstelle zum Spannen eines Werkzeugs. Die Aufnahmeeinrichtung kann in diesem Zusammenhang auch zur Aufnahme angetriebener Werkzeuge ausgestaltet sein. In solchen Fällen bietet sich etwa eine HSK-Schnittstelle an, mittels derer die Kalibriereinrichtung in die Aufnahmeeinrichtung aufgenommen werden kann.

Bei der Schnittstelle zur Befestigung der erfindungsgemäßen Kalibriereinrichtung an einem Maschinenabschnitt kann es sich etwa um einen Magnetfuß handeln, mittels dessen die Kalibriereinrichtung an dem Maschinenabschnitt befestigbar ist. Die Kalibriereinrichtung kann aber auch beispielweise einen Einspannabschnitt aufweisen, insbesondere in Form eines Sockels, mittels dessen die Kalibriereinrichtung in eine Befestigungseinrichtung an dem Maschinenabschnitt gespannt werden kann.

Im Falle einer Drehmaschine ist es zweckmäßig, etwa eine entsprechende Spannvorrichtung an einer drehbaren Werkstückspindel vorzusehen, die dann als Einrichtung zur Befestigung der Kalibriereinrichtung an dem Maschinenabschnitt fungiert, wobei die Spannvorrichtung in einer Position zur Erfassung der exakten Drehachse der drehbaren Werkstückspindel vorgesehen ist.

Bei einem besonders zweckmäßigen Ausführungsbeispiel weist das Gehäuse Sensorelemente auf, mittels derer eine Deformation des Gehäuses der Kalibriereinrichtung erfasst werden kann. In diesem Fall ist die Werkzeugmaschine derart konfiguriert, dass nach Erfassung einer Deformation des Gehäuses die Verfahrbewegung der Aufnahmeeinrichtung automatisch gestoppt wird. Auf diese Weise kann sichergestellt werden, dass das Kalibriernormal, das z.B. in der Hülse geschützt ist, beim Einsetzen in die Befestigungsvorrichtung an dem Maschinenabschnitt oder beim sonstigen Verfahren nicht beschädigt werden kann.

Eine mit der erfindungsgemäßen Vorrichtung zum Vermessen einer Werkzeugmaschine ausgestattete Werkzeugmaschine kann einen Speicher, vorzugsweise ein Werkzeugmagazin oder einen Werkzeugrevolver, aufweisen, in dem die Kalibriereinrichtung, der Messtaster sowie Werkzeuge und/oder Werkstücke gespeichert werden können, die durch die Aufnahmeeinrichtung oder einen Manipulator, der an die Aufnahmeeinrichtung zustellt, entnommen werden können. Im Falle einer Drehmaschine kann es sich um einen Werkzeugspeicher handeln, der als Werkzeugrevolver ausgebildet ist und in dessen Werkzeugaufnahme ein geschützter Platz für Messtaster und ein Platz für den Halter vorgesehen sind, der das Kalibriernormal der Kalibriereinrichtung aufnimmt. Auch ein Kreuzschlitten mit einer Mehrzahl von Werkzeugaufnahmen kann zweckmäßigerweise als Werkzeugspeicher dienen.

Bei einem bevorzugten Ausführungsbeispiel weist das Gehäuse zudem Haltemittel wie z.B. Rasten auf, mittels derer die Kalibriereinrichtung während des Transports in dem Gehäuse gehaltert wird dergestalt, dass die Schnittstelle zur Befestigung der Kalibriereinrichtung an einem Maschinenabschnitt der Werkzeugmaschine frei zugänglich ist, sodass die Kalibriereinrichtung ohne Weiteres an der Befestigungseinrichtung befestigt werden kann. Dies kann zweckmäßigerweise über die bereits angesprochenen Magnetfüße oder über eine Ausgestaltung eines Sockels der Kalibriereinrichtung als Spannscheibe, die etwa in einem Spannfutter eingespannt wird, erfolgen.

Die Erfindung umfasst auch ein Verfahren zum Vermessen einer Werkzeugmaschine mit einer erfindungsgemäßen Kalibriereinrichtung, wobei das Verfahren die Schritte umfasst:
Bereitstellen einer Kalibriereinrichtung in einem Speicher zur Aufnahme von Werkzeugen und/oder Werkstücken, Verfahren einer Aufnahmeeinrichtung in eine Position nahe des Speichers zur Aufnahme der Kalibriereinrichtung und Entnahme aus dem Speicher, Aufnehmen der Kalibriereinrichtung durch die Aufnahmeeinrichtung und Verfahren der Aufnahmeeinrichtung in eine Position nahe einer an einem zu vermessendem Werkzeugmaschinenabschnitt vorgesehenen Einrichtung zur Befestigung der Kalibriereinrichtung an dem Maschinenabschnitt, Befestigen der Kalibriereinrichtung an dem Maschinenabschnitt durch Verfahren der Aufnahmeeinrichtung in eine Befestigungsposition an dem Maschinenabschnitt und Aufnahme in der an dem Maschinenabschnitt angeordneten Befestigungseinrichtung und Vermessen einer Position der Kalibriereinrichtung an dem Maschinenabschnitt mit einem Messtaster.

Der Schritt des Vermessens einer Position der Kalibriereinrichtung an dem Maschinenabschnitt mit dem Messtaster kann vorzugsweise die Schritte Verfahren der Aufnahmeeinrichtung zu einem Speicher, Aufnehmen des Messtasters aus dem Speicher, Verfahren der Aufnahmeeinrichtung mit dem Messtaster in einer Messposition nahe der an dem Maschinenabschnitt befestigten Kalibriereinrichtung und Vermessen mehrerer Positionen eines Kalibriernormals der Kalibriereinrichtung und Ermitteln einer Position des Maschinenabschnitts aus den ermittelten Messpositionen umfassen.

Das erfindungsgemäße Verfahren erlaubt eine vollautomatisierte Durchführung des Verfahrens zum Vermessen einer Werkzeugmaschine zur Kalibrierung, in dem die Positionierung und Befestigung der Kalibriereinrichtung an dem zu vermessenden Maschinenteil in ähnlicher Weise mittels einer durch CNC-Steuerung verfahrbaren Vorrichtung vorgenommen wird, wie das Einwechseln eines Werkzeugs an einer programmgesteuerten Werkzeugmaschine. Dies wird ermöglicht durch die konstruktive Ausgestaltung der erfindungsgemäßen Kalibriereinrichtung mit Schnittstellen, die einerseits eine Aufnahme in der Aufnahmeeinrichtung und andererseits eine automatisierbare Befestigung an einem zu vermessendem Maschinenteil ermöglichen.

Auf diese Weise kann der Vorgang des Vermessens vollständig in den Prozessablauf zur Bearbeitung eines Werkstücks an der Werkzeugmaschine integriert werden, sodass keine Unterbrechungen und aufwendige Vorbereitungen der Werkzeugmaschine von Nöten ist.

Bevorzugte Ausführungsformen und Einzelheiten der Erfindung werden nachfolgend anhand der Figuren beschrieben, in denen
- **Figur 1**: eine Gegenspindel-Drehmaschine mit erfindungsgemäßer Vorrichtung zum Vermessen einer Werkzeugmaschine in schematischer Darstellung,
- **Figur 2**: eine erfindungsgemäße Kalibriereinrichtung mit einem Halter mit eingesetztem Kalibriernormal,
- **Figur 3**: den Halter gemäß Figur 2 im Querschnitt,
- **Figur 4**: eine erfindungsgemäße Kalibriereinrichtung mit Magnetfuß zur Befestigung an einem zu vermessenden Maschinenabschnitt,
- **Figur 5**: die Kalibriereinrichtung gemäß Figur 4 im Querschnitt,
- **Figur 6**: eine erfindungsgemäße Kalibriereinrichtung mit zylindrischer Spannscheibe zur Befestigung in einer Spanneinrichtung an einem Werkzeugmaschinenabschnitt,
- **Figur 7**: die erfindungsgemäße Kalibriereinrichtung gemäß Figur 6 im Querschnitt, und
- **Figur 8a - 8g**: ein Ausführungsbeispiel des erfindungsgemäßen Verfahrens zum Vermessen einer Werkzeugmaschine mittels einer Kalibriereinrichtung
zeigen.

Die erfindungsgemäße Vorrichtung zum Vermessen einer Werkzeugmaschine wird nachfolgend am Beispiel einer Drehmaschine beschrieben, wenngleich die erfindungsgemäße Vorrichtung auch mit anderen Werkzeugmaschinentypen, wie z.B. Fräszentren, realisiert werden kann.

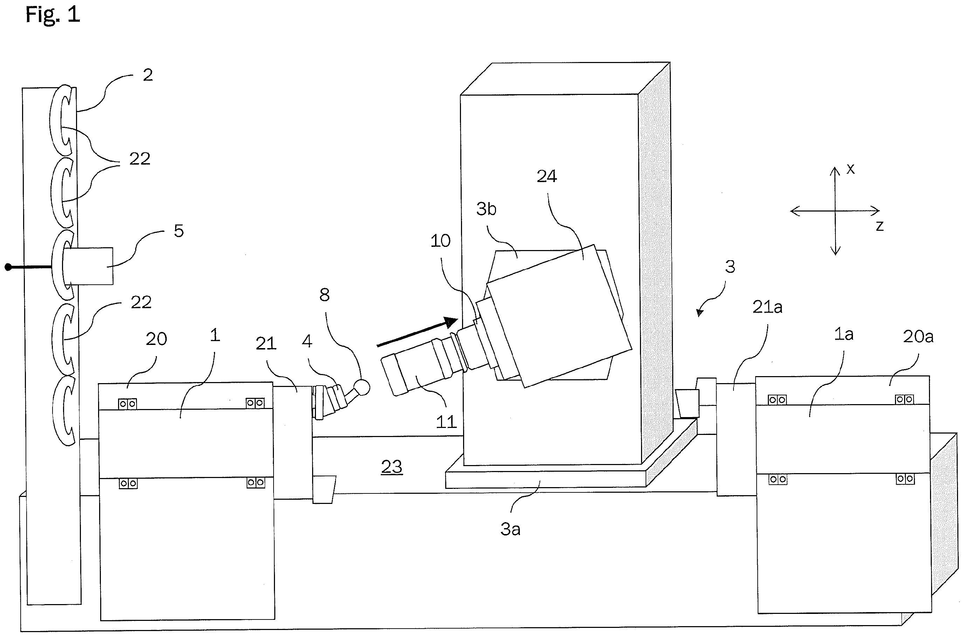

Die in Figur 1 gezeigte Gegenspindel-Drehmaschine weist einen unverschieblichen Spindelkasten 20 und einen in Z-Richtung verschiebbaren Spindelkasten 20a auf. In den Spindelkästen 20, 20a ist jeweils eine Werkstückspindel als drehbares Maschinenteil 1 bzw. 1a gelagert. Die Werkstückspindeln tragen einander zugewandte Spannvorrichtungen 21, 21a. Die Spindelkästen 20 und 20a sind an einem Maschinenbett befestigt auf dem ein Längsschlitten 3a in Z-Richtung verfahrbar ist. Auf dem Längsschlitten 3a ist ein Planschlitten 3b geführt, an dem ein Werkzeugträger um eine horizontale Achse schwenkbar gelagert ist. Der Werkzeugträger 24 weist eine Werkzeugaufnahme auf, in die (nicht dargestellt) Werkzeuge, ein Messtaster 5 und ein Gehäuse einer Kalibrierlehre 4 einsetzbar sind. An einem Ende der Gegenspindel-Drehmaschine ist ein Werkzeugspeicher 2 mit Speicherplätzen 22 in Form eines Werkzeugmagazins angeordnet, in denen ein Messtaster 5, das Gehäuse 9 und Werkzeuge aufgenommen werden können.

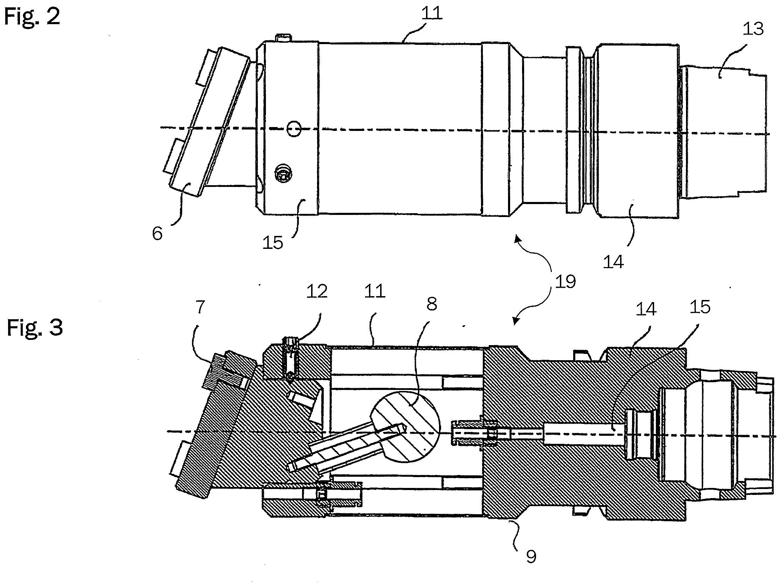

Figur 2 veranschaulicht den Gesamtaufbau einer erfindungsgemäßen Kalibriereinrichtung 19. Sie weist ein Gehäuse mit einer Hülse 11 auf, an die sich ein Halterschaft 14 anschließt, an dessen Ende ein Kurzkegelschaft 13 ausgebildet ist, mit dem die erfindungsgemäße Kalibriereinrichtung 19 in die Werkzeugaufnahme 10 einsetzbar ist. Bei dem vorliegenden Ausführungsbeispiel ist die Hülse 11 aus CFK-Material hergestellt, sie kann jedoch aus einem anderen dünnwandigen Material beschaffen sein. Die Hülse 11 schützt ein als Messkugel ausgebildetes Kalibriernormal 8, das in ihr aufgenommen ist, vor Verschmutzung. An dem dem Kurzkegelschaft 13 gegenüberliegenden Ende weist die erfindungsgemäße Kalibriereinrichtung 19 einen Sockel 6 auf, der mit Magnetfüßen 7 versehen ist, mittels derer die erfindungsgemäße Kalibriereinrichtung 19 an der Spanneinrichtung 21 fixiert werden kann. Wie in Figur 1 veranschaulicht, ist die Montageposition der erfindungsgemäßen Kalibriereinrichtung 19 bei diesem Ausführungsbeispiel derart, dass das Kalibriernormal 8 konzentrisch zu der Drehachse des drehbaren Maschinenteils 1 angeordnet ist.

Wie in der Figur 3, die eine Darstellung der Figur 2 im Querschnitt zeigt, dargestellt, weisen der Kurzkegelschaft 13 und der Halterschaft 14 eine Bohrung 15 auf, durch die Sperrluft in den von der Hülse 11 gebildeten Innenraum geleitet wird, um das Eindringen von Verschmutzungen zu verhindern. An die Hülse 11 schließt ein Ringelement 15 an, in dem über den Umfang verteilt Rasten 12 vorgesehen sind. Die Rasten 12 halten die Kalibrierlehre während des Transports in der Hülse 11 derart, dass der Sockel 6 frei zugänglich ist und mit seinen Magnetfüßen 7 an die Befestigungseinrichtung 21 fixiert werden kann.

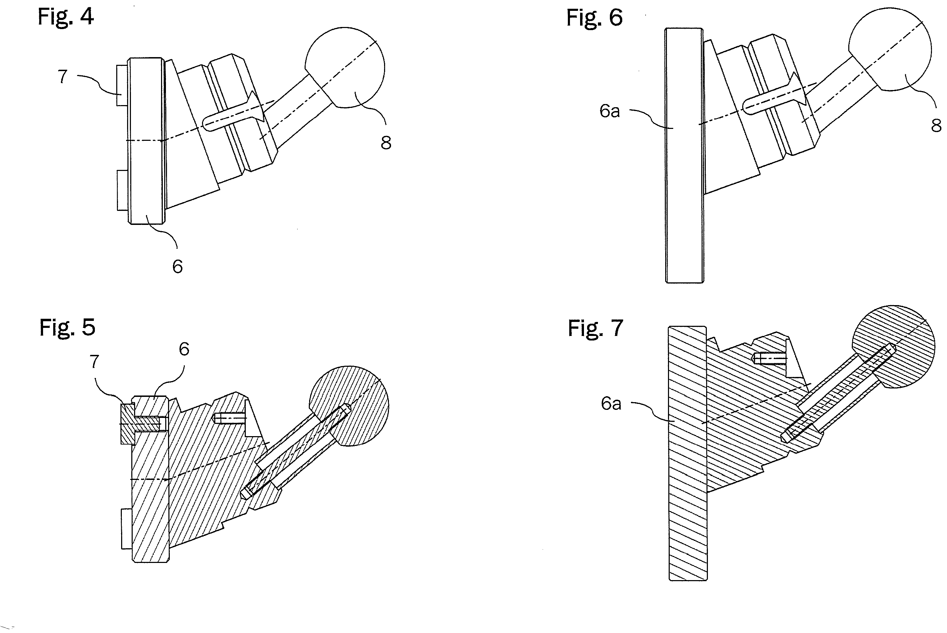

Die Figuren 4 bzw. 5 und 6 bzw. 7 veranschaulichen verschiedene Ausführungsformen der Schnittstelle zur Befestigung eines Teils der erfindungsgemäßen Kalibriereinrichtung an dem zu vermessenden Maschinenabschnitt.

Figur 4 zeigt den an dem Maschinenabschnitt zu befestigenden Teil der erfindungsgemäßen Kalibriereinrichtung, umfassend das Kalibriernormal und die Schnittstelle zur Aufnahme an der Befestigungsvorrichtung an dem Maschinenabschnitt, die bei dem Ausführungsbeispiel der Figur 4 durch einen Sockel 6 gebildet wird, der Magnetfüße 7 aufweist. Die Figur 5 zeigt diesen Teil der erfindungsgemäßen Kalibriereinrichtung im Querschnitt.

Bei den Alternativen des in Figur 6 und 7 veranschaulichten Ausführungsbeispiel des Teils der erfindungsgemäßen Kalibriereinrichtung, das an den Maschinenabschnitt befestigt werden kann, handelt es sich um eine Schnittstelle in Form einer Spannscheibe 6a, mittels derer das Kalibriernormal 8 an der in Figur 1 gezeigten Spanneinrichtung 21 der Werkstückspindel stirnseitig gespannt wird. Wie in Zusammenschau mit Figur 1 deutlich wird, ist die Spannscheibe 6a konzentrisch zur Werkzeugspindelachse aufgenommen, wobei das Kalibriernormal exzentrisch an der Spannscheibe befestigt ist. Die Spanneinrichtung 21 ist zentrisch zur Werkzeugspindelachse angeordnet.

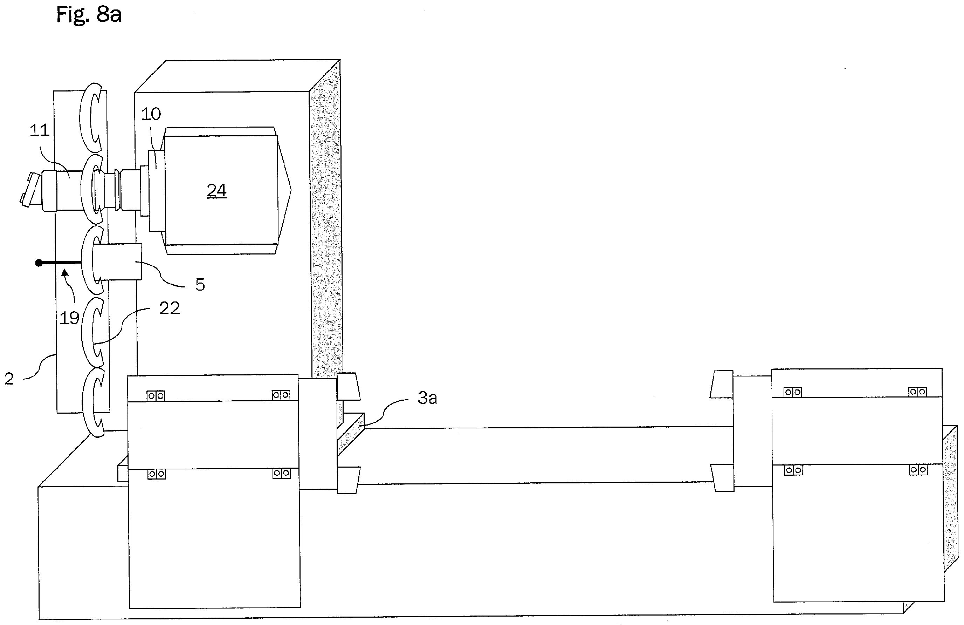

Ein Ausführungsbeispiel des erfindungsgemäßen Verfahrens zur Vermessung einer Werkzeugmaschine wird im Folgenden anhand der Figuren 8a-g beschrieben.

Figur 8a zeigt das Aufnehmen einer erfindungsgemäßen Kalibriereinrichtung 19, die in einem Werkzeugspeicher 22 gelagert ist, durch eine Aufnahmeeinrichtung 24, die bei diesem Ausführungsbeispiel als Werkzeugträger ausgestaltet ist mit einer Werkzeugaufnahme 10, die bei diesem Ausführungsbeispiel als aufnahmeeinrichtungsseitige Schnittstelle zur Aufnahme der erfindungsgemäßen Kalibriereinrichtung 19 dient. Wie in Figur 8a veranschaulicht, ist in dem Werkzeugmagazin 2 ebenfalls ein Messtaster 5 gelagert.

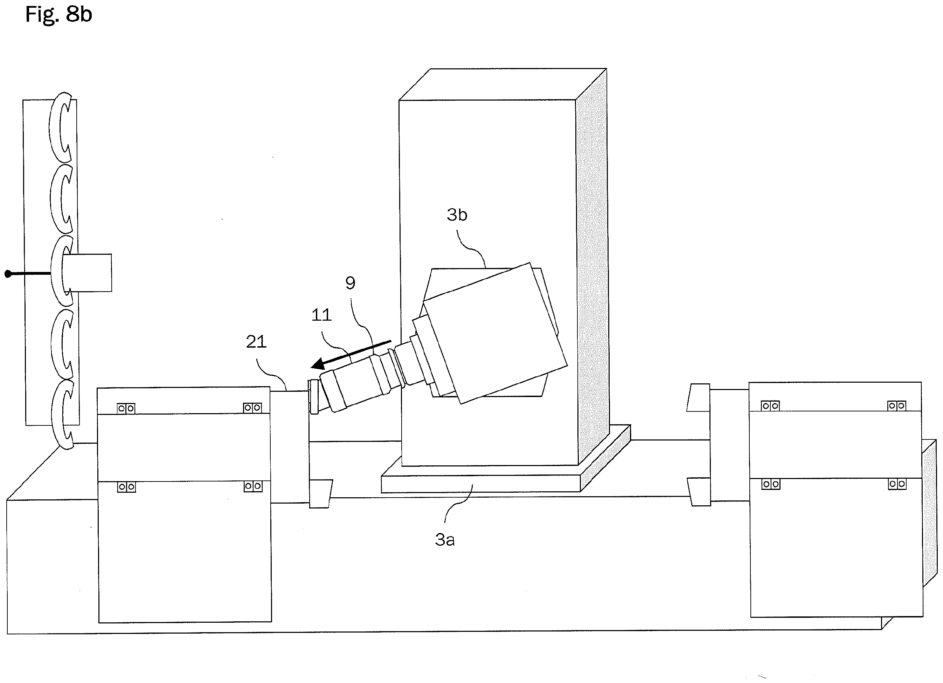

Im nächsten Schritt erfolgt ein Verfahren der Aufnahmeeinrichtung über die beiden Schlitten 3a, 3b hin zu einer Befestigungsposition der erfindungsgemäßen Kalibriereinrichtung in einer Befestigungseinrichtung an einem Werkzeugabschnitt 21, wie in Figur 8b veranschaulicht.

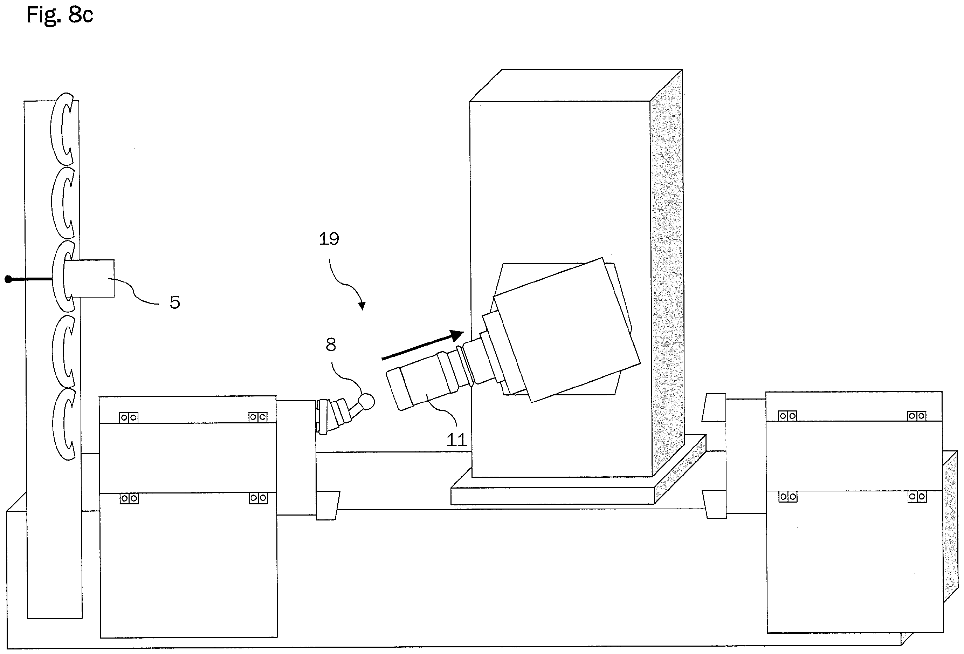

Im nächsten Schritt wird die Aufnahmeeinrichtung 24, im vorliegenden Ausführungsbeispiel der Werkzeugträger mit Werkzeugaufnahme 10, nach Fixierung des Teils der erfindungsgemäßen Kalibriereinrichtung mit dem Kalibriernormal 8 an dem Maschinenabschnitt entfernt. Dabei wird, wie in Figur 8c gezeigt, die Hülse 11 mit der Schnittstelle der erfindungsgemäßen Kalibriereinrichtung zur Aufnahme an der Aufnahmeeinrichtung in Form des Kegelschafts 13 abgezogen, sodass das Kalibriernormal 8 freigelegt wird für eine Vermessung mittels des Messtasters 5.

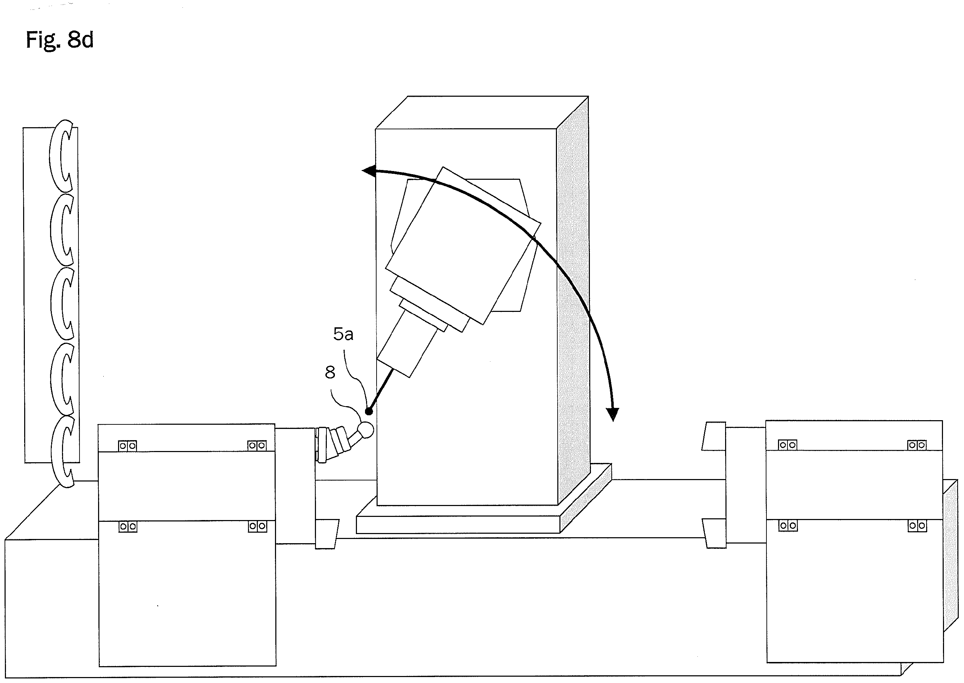

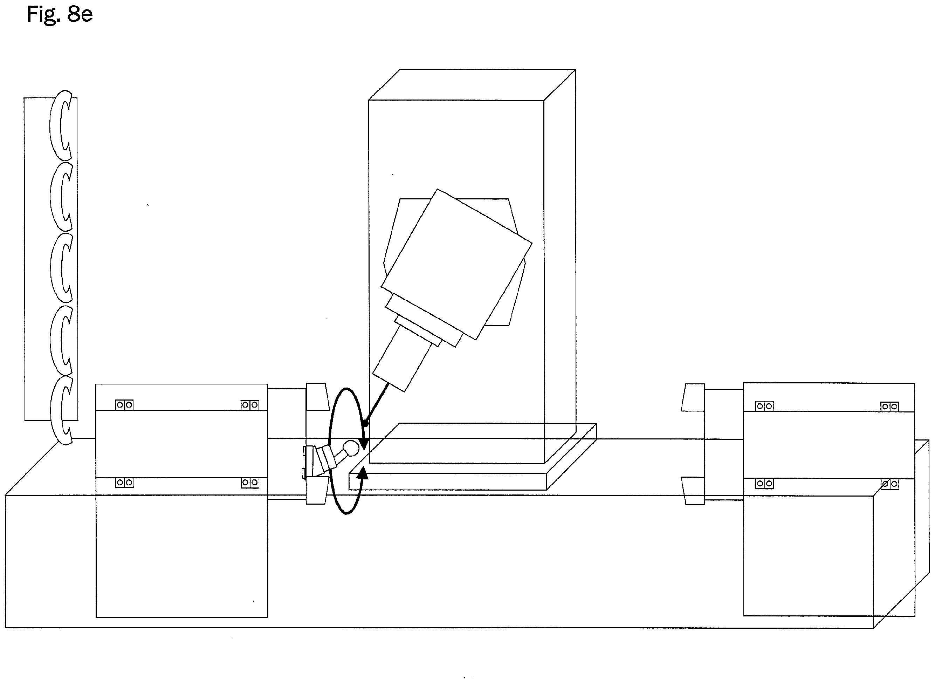

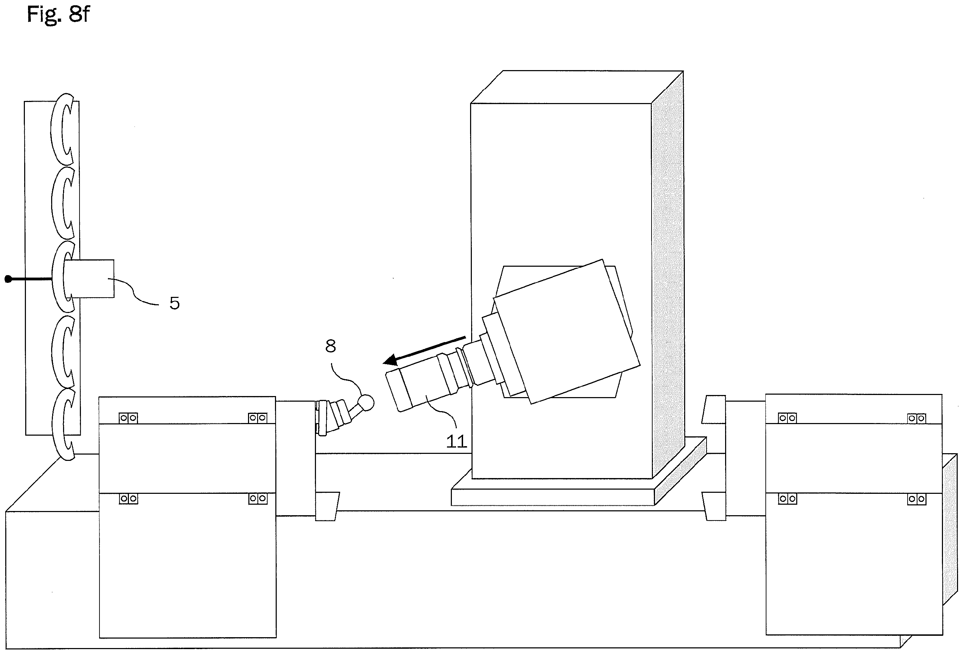

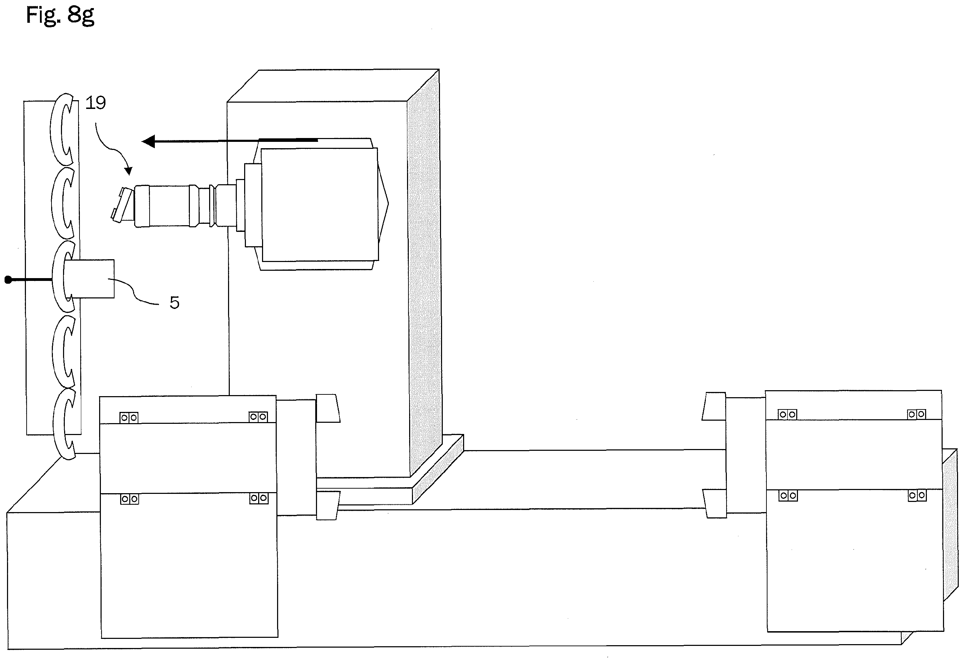

Dieser Messtaster 5 wird im nächsten Verfahrensschritt durch die Aufnahmeeinrichtung im Werkzeugmagazin 2 aufgenommen und ein Messfühler 5a wird durch Verfahren der Aufnahmeeinrichtung 24 in der Nähe des als Messkugel ausgestalteten Kalibriernormals 8 in einer Messposition B angeordnet; vgl. Fig. 8d. Nachfolgend wird, wie in Figur 8e veranschaulicht, die Werkstückspindel 1 gedreht und auf diese Weise das exzentrisch angeordnete Kalibriernormal in eine zweite Messposition C verbracht, in der es ebenfalls durch den Messtaster vermessen wird. Die Figuren 8f und 8g veranschaulichen die Verfahrensschritte des Entfernens der erfindungsgemäßen Kalibriereinrichtung von dem zu vermessenden Maschinenabschnitt durch Aufnahme des Kalibriernormals 8 in der Hülse 11 und Lösen von der Befestigung an dem Maschinenabschnitt, was sich als Verfahrensschritt an die Ablage des Tasters im Werkzeugmagazin (nicht dargestellt) anschließt. Abschließend wird, wie in Figur 8g veranschaulicht, die gesamte erfindungsgemäße Kalibriereinrichtung im Werkzeugmagazin 2 abgelegt.

Obgleich das erfindungsgemäße Verfahren am Beispiel einer zweiteiligen erfindungsgemäßen Kalibriereinrichtung, bei der nur ein Teil der Kalibriereinrichtung 19 an dem Maschinenabschnitt fixiert wird, beschrieben wurde, ist die vorliegende Erfindung nicht hierauf beschränkt, sondern umfasst auch Ausgestaltungen, bei denen die gesamte erfindungsgemäße Kalibriereinrichtung einschließlich der Schnittstelle zur Aufnahme an der Aufnahmeeinrichtung an dem entsprechenden Maschinenteil befestigt wird und während des Messvorgangs dort verbleibt.

## Patentansprüche

1. Vorrichtung zum Vermessen einer Werkzeugmaschine umfassend:
- eine Kalibriereinrichtung (19), die dazu eingerichtet ist, an einem Abschnitt der Werkzeugmaschine befestigt zu werden, und
- einen Messtaster (5) zur Erfassung von einer Position der Kalibriereinrichtung (19) an der Werkzeugmaschine,
wobei die Kalibriereinrichtung (19) eine Schnittstelle (13) aufweist, mittels derer die Kalibriereinrichtung (19) in eine numerisch verfahrbare Aufnahmeeinrichtung (24) der Werkzeugmaschine ein- und auswechselbar ist, mit der die Kalibriereinrichtung zwischen einer Bereitstellungsposition und einer Befestigungsposition an dem Abschnitt der Werkzeugmaschine transportierbar ist,
**dadurch gekennzeichnet, dass**
die Schnittstelle (13) zum Ein- bzw. Auswechseln in die Aufnahmeeinrichtung (24) einen Halter aufweist, in den ein Kalibriernormal (8) der Kalibriereinrichtung (19) einsetzbar ist,
wobei der Halter ein das Kalibriernormal (8) umgebendes Schutzgehäuse (9) aufweist.

2. Vorrichtung zum Vermessen einer Werkzeugmaschine nach Patentanspruch 1, **dadurch gekennzeichnet, dass**
das Kalibriernormal (8) mittels einer zweiten Schnittstelle (6, 7; 6a) an dem Maschinenabschnitt befestigbar ist.

3. Vorrichtung zum Vermessen einer Werkzeugmaschine nach Patentanspruch 1 oder 2, **dadurch gekennzeichnet, dass**
die Kalibriereinrichtung (19) mehrteilig aufgebaut ist, bestehend aus einem ersten Teil, der die Schnittstelle (13) zur Aufnahme an der Aufnahmeeinrichtung (24) umfasst und einem davon lösbaren zweiten Teil, der das Kalibriernormal (8) und die Schnittstelle (6, 7; 6a) zur Befestigung an einem Maschinenteil (1) umfasst.

4. Vorrichtung zum Vermessen einer Werkzeugmaschine nach einem der Patentansprüche 1 bis 3, **dadurch gekennzeichnet, dass**
das Schutzgehäuse (9) aus einer dünnwandigen, flexiblen Hülse (11) besteht.

5. Vorrichtung zum Vermessen einer Werkzeugmaschine nach einem der Patentansprüche 1 bis 4, **dadurch gekennzeichnet, dass**
die Kalibriereinrichtung (19) derart konfiguriert ist, dass durch eine Verformung des Gehäuses (9) ein Signal zum Steuern eines Verfahrvorgangs der Aufnahmeeinrichtung (24) erzeugt wird.

6. Vorrichtung zum Vermessen einer Werkzeugmaschine nach einem der Patentansprüche 1 bis 5, **dadurch gekennzeichnet, dass**
die Kalibriereinrichtung (19) einen Magnetfuß (7) aufweist, mittels dessen sie an dem Maschinenabschnitt befestigbar ist.

7. Vorrichtung zum Vermessen einer Werkzeugmaschine nach einem der Patentansprüche 1 bis 6, **dadurch gekennzeichnet, dass**
die Kalibriereinrichtung (19) einen Einspannabschnitt, insbesondere in Form eines Sockels (6a), aufweist, mittels dessen die Kalibriereinrichtung (19) an dem Maschinenabschnitt gespannt werden kann.

8. Vorrichtung zum Vermessen einer Werkzeugmaschine nach einem der vorhergehenden Patentansprüche, **dadurch gekennzeichnet, dass**
die Kalibriereinrichtung (19) durch Rasten (12) lösbar an dem Halter gehaltert ist.

9. Kalibriereinrichtung (19) zum Einsatz in einer Vorrichtung zum Vermessen einer Werkzeugmaschine nach einem der Patentansprüche 1 bis 8,
wobei die Kalibriereinrichtung (19) eine Schnittstelle (13) aufweist, mittels derer die Kalibiereinrichtung (19) in eine numerisch verfahrbare Aufnahmeeinrichtung (24) der Werkzeugmaschine ein- und auswechselbar ist, wobei die Schnittstelle (13) zum Ein- bzw. Auswechseln in die Aufnahmeeinrichtung (24) einen Halter aufweist, in den ein Kalibriernormal (8) der Kalibriereinrichtung (19) einsetzbar ist, und wobei der Halter ein das Kalibriernormal (8) umgebendes Schutzgehäuse (9) aufweist.

10. Werkzeugmaschine mit einer Kalibriereinrichtung (19) nach Patentanspruch 9,
wobei ein Maschinenabschnitt (1), an dem die Kalibriereinrichtung (19) befestigbar ist, eine drehbare Werkstückspindel umfasst, und
eine Einrichtung (21) zur Befestigung der Kalibriereinrichtung (19) an dem Maschinenabschnitt (1) in einer Position exzentrisch zur Achse der drehbaren Werkstückspindel aufweist.

11. Werkzeugmaschine mit einer Kalibriereinrichtung (19) nach Patentanspruch 9,
wobei eine numerisch verfahrbare Aufnahmeeinrichtung (24) der Werkzeugmaschine einen Werkzeugträger (24) und mindestens einen Schlitten (3a, 3b) umfasst, mittels dessen diese in eine Position zur Befestigung der in dem Werkzeugträger (24) aufgenommenen Kalibriereinrichtung (19) an dem Maschinenabschnitt (1) verfahrbar ist.

12. Werkzeugmaschine mit einer Kalibriereinrichtung (19) nach Patentanspruch 9,
wobei eine numerisch verfahrbare Aufnahmeeinrichtung (24) als Spindel ausgebildet ist, in die die Kalibriereinrichtung (19) und ein Messtaster (5) ein- bzw. auswechselbar sind.

13. Verfahren zum Vermessen einer Werkzeugmaschine mit einer Kalibriereinrichtung (19), umfassend die Schritte:
- Bereitstellen einer Kalibriereinrichtung (19) nach Patentanspruch 9 in einem Speicher (2) zur Aufnahme von Werkzeugen und/oder Werkstücken,
- Verfahren einer Aufnahmeeinrichtung (24) in eine Position nahe des Speichers (2) zur Aufnahme der Kalibriereinrichtung (19) und Entnahme aus dem Speicher (2),
- Aufnehmen der Kalibriereinrichtung (19) durch die Aufnahmeeinrichtung (24) und Verfahren der Aufnahmeeinrichtung (24) in eine Position nahe einer an einem Werkzeugmaschinenabschnitt (1) vorgesehenen Einrichtung (21) zur Befestigung der Kalibriereinrichtung (19) an dem Maschinenabschnitt (1),
- Befestigen der Kalibriereinrichtung (19) an dem Maschinenabschnitt (1) durch Verfahren der Aufnahmeeinrichtung (24) in eine Befestigungsposition an dem Maschinenabschnitt (1) und Aufnahme in einer an dem Maschinenabschnitt (1) angeordneten Befestigungseinrichtung (21), und
- Vermessen einer Position der Kalibriereinrichtung (19) an dem Maschinenabschnitt mit einem Messtaster (5).

14. Verfahren nach Patentanspruch 13 **dadurch gekennzeichnet, dass**
der Schritt Vermessen einer Position der Kalibriereinrichtung (19) an dem Maschinenabschnitt (1) mit dem Messtaster (5) die folgenden Schritte umfasst:
- Verfahren der Aufnahmeeinrichtung (24) zu einem Speicher (2),
- Aufnehmen des Messtasters (5) aus dem Speicher (2),
- Verfahren der Aufnahmeeinrichtung (24) mit dem Messtaster (5) in einer Messposition nahe der an dem Maschinenabschnitt (1) befestigten Kalibriereinrichtung (19),
- Vermessen mehrerer Positionen eines Kalibriernormals (8) der Kalibriereinrichtung (19), und
- Ermitteln einer Position des Maschinenabschnitts (1) aus den ermittelten Messpositionen.

## Claims

1. A device for measuring a machine tool, comprising:
- a calibration means (19) configured to be fastened to a portion of said machine tool, and
- a measuring probe (5) for detecting a position of said calibration means (19) on said machine tool,
wherein said calibration means (19) includes an interface (13) by means of which said calibration means (19) can be inserted into and removed from a numerically displaceable receiving means (24) of said machine tool, with which said calibration means can be transported between a ready position and a fastening position on the portion of said machine tool,
**characterized in that**
said interface (13) includes a holder for inserting into or removing from said receiving means (24), a calibration standard (8) of said calibration means (19) being insertable into said holder,
wherein said holder includes a protective case (9) surrounding said calibration standard (8).

2. The device for measuring a machine tool according to claim 1, **characterized in that**
said calibration standard (8) can be fastened to the machine portion by means of a second interface (6, 7; 6a).

3. The device for measuring a machine tool according to claim 1 or 2, **characterized in that**
said calibration means (19) is constructed of a plurality of parts, consisting of a first part which includes said interface (13) for receiving on said receiving means (24) and a second part which can be detached therefrom and which includes said calibration standard (8) and said interface (6, 7; 6a) for fastening to a machine part (1).

4. The device for measuring a machine tool according to one of the claims 1 to 3, **characterized in that**
said protective case (9) consists of a thin-walled flexible sleeve (11).

5. The device for measuring a machine tool according to one of the claims 1 to 4, **characterized in that**
said calibration means (19) is configured such that a signal for controlling a displacement operation of said receiving means (24) is generated by a deformation of said case (9).

6. The device for measuring a machine tool according to one of the claims 1 to 5, **characterized in that**
said calibration means (19) includes a magnetic foot (7) by means of which it can be fastened to the machine portion.

7. The device for measuring a machine tool according to one of the claims 1 to 6, **characterized in that**
said calibration means (19) includes a clamping portion, in particular in the form of a base (6a), by means of which said calibration means (19) can be clamped to the machine portion.

8. The device for measuring a machine tool according to one of the preceding claims, **characterized in that**
said calibration means (19) is detachably held on said holder by catches (12).

9. A calibration means (19) for use in a device for measuring a machine tool according to one of the claims 1 to 8,
wherein said calibration means (19) includes an interface (13) by means of which said calibration means (19) can be inserted into and removed from a numerically displaceable receiving means (24) of said machine tool,
wherein said interface (13) includes a holder for inserting into or removing from said receiving means (24), a calibration standard (8) of said calibration means (19) being insertable into said holder, and
wherein said holder includes a protective case (9) surrounding said calibration standard (8).

10. The machine tool including a calibration means (19) according to claim 9,
wherein a machine portion (1) to which said calibration means (19) can be fastened comprises a rotatable workpiece spindle, and
said machine tool comprises a means (21) for fastening said calibration means (19) to the machine portion (1) in a position eccentric with respect to the axis of the rotatable workpiece spindle.

11. The machine tool including a calibration means (19) according to claim 9,
wherein a numerically displaceable receiving means (24) of said machine tool comprises a tool carrier (24) and at least one slide (3a, 3b) by means of which it can be moved to a position for fastening said calibration means (19) received in said tool carrier (24) to the machine portion (1).

12. The machine tool including a calibration means (19) according to claim 9,
wherein a numerically displaceable receiving means (24) is configured as a spindle into which said calibration means (19) and a measuring probe (5) can be inserted or from which they can be removed.

13. A method for measuring a machine tool including a calibration means (19), comprising the steps of:
- providing a calibration means (19) according to claim 9 in a store (2) for receiving tools and/or workpieces,
- moving a receiving means (24) to a position close to said store (2) for receiving said calibration means (19) and removing it from said store (2),
- receiving said calibration means (19) by means of said receiving means (24) and moving said receiving means (24) to a position close to a means (21) for fastening said calibration means (19) to said machine portion (1), said means (21) being provided on a machine tool portion (1),
- fastening said calibration means (19) to said machine portion (1) by moving said receiving means (24) into a fastening position on the machine portion (1) and receiving it in a fastening means (21) arranged on the machine portion (1), and
- measuring a position of said calibration means (19) on the machine portion with a measuring probe (5).

14. The method according to claim 13, **characterized in that**
the step of measuring a position of said calibration means (19) on the machine portion (1) with said measuring probe (5) comprises the steps of:
- moving said receiving means (24) to a store (2),
- receiving said measuring probe (5) from said store (2),
- moving said receiving means (24) with said measuring probe (5) into a measuring position close to said calibration means (19) fastened to the machine portion (1),
- measuring a plurality of positions of a calibration standard (8) of said calibration means (19), and
- determining a position of the machine portion (1) from the determined measuring positions.

## Revendications

1. Dispositif pour le relevé des cotes d'une machine-outil comprenant :
- un système d'étalonnage (19), qui est conçu pour être fixé sur une section de la machine-outil, et
- un capteur de mesure (5) pour la détection d'une position du système d'étalonnage (19) sur la machine-outil,
dans lequel le système d'étalonnage (19) présente une interface (13), au moyen de laquelle le système d'étalonnage (19) peut être rentré et sorti de manière interchangeable dans un système de réception (24) déplaçable numériquement de la machine-outil, avec lequel le système d'étalonnage peut être transporté entre une position de mise à disposition et une position de fixation sur la section de la machine-outil,
**caractérisé en ce que**
l'interface (13) présente pour la rentrée ou la sortie interchangeable dans le système de réception (24) un support, dans lequel un étalon d'étalonnage (8) du système d'étalonnage (19) peut être inséré,
dans lequel le support présente un boîtier de protection (9) entourant l'étalon d'étalonnage (8).

2. Dispositif pour le relevé des cotes d'une machine-outil selon la revendication 1, **caractérisé en ce que**
l'étalon d'étalonnage (8) peut être fixé sur la section de machine au moyen d'une deuxième interface (6 ; 7 ; 6a).

3. Dispositif pour le relevé des cotes d'une machine-outil selon la revendication 1 ou 2, **caractérisé en ce que**
le système d'étalonnage (19) présente une structure en plusieurs parties, constituées d'une première partie, qui comprend l'interface (13) pour la réception sur le système de réception (24) et d'une deuxième partie pouvant être détachée de celle-ci, qui comprend l'étalon d'étalonnage (8) et l'interface (6, 7 ; 6a) pour la fixation sur une partie de machine (1).

4. Dispositif pour le relevé des cotes d'une machine-outil selon l'une quelconque des revendications 1 à 3, **caractérisé en ce que**
le boîtier de protection (9) est constitué d'un manchon (11) flexible à parois minces.

5. Dispositif pour le relevé des cotes d'une machine-outil selon l'une quelconque des revendications 1 à 4, **caractérisé en ce que**
le système d'étalonnage (19) est configuré de telle sorte qu'un signal pour commander un processus de déplacement du système de réception (24) est généré par une déformation du boîtier (9).

6. Dispositif pour le relevé des cotes d'une machine-outil selon l'une quelconque des revendications 1 à 5, **caractérisé en ce que**
le système d'étalonnage (19) présente un pied magnétique (7), au moyen duquel il peut être fixé sur la section de machine.

7. Dispositif pour le relevé des cotes d'une machine-outil selon l'une quelconque des revendications 1 à 6, **caractérisé en ce que**
le système d'étalonnage (19) présente une section de serrage, en particulier sous forme d'un socle (6a), au moyen de laquelle le système d'étalonnage (19) peut être serré sur la section de machine.

8. Dispositif pour le relevé des cotes d'une machine-outil selon l'une quelconque des revendications précédentes, **caractérisé en ce que**
le système d'étalonnage (19) est maintenu de manière détachable sur le support par des crans d'arrêt (12).

9. Système d'étalonnage (19) à insérer dans un dispositif pour le relevé des cotes d'une machine-outil selon l'une quelconque des revendications 1 à 8, dans lequel le système d'étalonnage (19) présente une interface (13), au moyen de laquelle le système d'étalonnage (19) peut être rentré ou sorti de manière interchangeable dans un système de réception (24) déplaçable numériquement de la machine-outil, dans lequel l'interface (13) présente pour la rentrée ou la sortie interchangeable dans le système de réception (24) un support, dans lequel un étalon d'étalonnage (8) du système d'étalonnage (19) peut être inséré, et dans lequel le support présente un boîtier de protection (9) entourant l'étalon d'étalonnage (8).

10. Machine-outil avec un système d'étalonnage (19) selon la revendication 9,
dans laquelle une section de machine (1), sur laquelle le système d'étalonnage (19) peut être fixé, comprend une broche porte-pièce rotative, et
un système (21) pour la fixation du système d'étalonnage (19) sur la section de machine (1) dans une position excentrique par rapport à l'axe de la broche porte-pièce rotative.

11. Machine-outil avec un système d'étalonnage (19) selon la revendication 9,
dans laquelle un système de réception (24) déplaçable numériquement de la machine-outil comprend un porte-outil (24) et au moins un chariot (3a, 3b), au moyen duquel celui-ci est déplaçable dans une position pour la fixation du système d'étalonnage (19) reçu dans le porte-outil (24) sur la section de machine (1).

12. Machine-outil avec un système d'étalonnage (19) selon la revendication 9,
dans laquelle un système de réception (24) déplaçable numériquement est réalisé sous la forme d'une broche, dans laquelle le système d'étalonnage (19) et un capteur de mesure (5) peuvent rentrer et sortir de manière interchangeable.

13. Procédé pour le relevé des cotes d'une machine-outil avec un système d'étalonnage (19), comprenant les étapes :
- de fourniture d'un système d'étalonnage (19) selon la revendication 9 dans un magasin (2) pour la réception d'outils et/ou de pièces,
- de déplacement d'un système de réception (24) dans une position proche du magasin (2) pour la réception du système d'étalonnage (19) et le prélèvement à partir du magasin (2),
- de réception du système d'étalonnage (19) par le système de réception (24) et de déplacement du système de réception (24) dans une position proche d'un système (21) prévu sur une section de machine-outil (1) pour la fixation du système d'étalonnage (19) sur la section de machine (1),
- de fixation du système d'étalonnage (19) sur la section de machine (1) par déplacement du système de réception (24) dans une position de fixation sur la section de machine (1) et réception dans un système de fixation (21) disposé sur la section de machine (1), et
- de relevé d'une position du système d'étalonnage (19) sur la section de machine avec un capteur de mesure (5).

14. Procédé selon la revendication 13, **caractérisé en ce que** l'étape de relevé d'une position du système d'étalonnage (19) sur la section de machine (1) avec le capteur de mesure (5) comprend les étapes suivantes :
- le déplacement du système de réception (24) vers un magasin (2),
- la réception du capteur de mesure (5) à partir du magasin (2),
- le déplacement du système de réception (24) avec le capteur de mesure (5) dans une position de mesure proche du système d'étalonnage (19) fixé sur la section de machine (1),
- le relevé de plusieurs positions d'un étalon d'étalonnage (8) du système d'étalonnage (19), et
- la détermination d'une position de la section de machine (1) à partir des positions de mesure déterminées.
